# EUROPÄISCHE PATENTANMELDUNG

(11) **EP 0 893 083 A2**
(43) Veröffentlichungstag der Anmeldung: **27.01.1999**
(21) Anmeldenummer: 98109705.8
(22) Anmeldetag: 27.05.1998
(51) Int. Cl.: A47F 7/14, A47F 3/00

(54) **Einhängerahmen für den Verkauf von verpackten Compact-Discs**

(30) Priorität: 28.05.1997 DE 19722392
(71) Anmelder: Breeze TV GmbH, 50259 Pulheim-Stommeln (DE)
(72) Erfinder: Dierks, Dieter, 50259 Pulheim (DE)
(74) Vertreter: Bauer, Wulf, Dr.

(57) **Zusammenfassung**

Die Erfindung bezieht sich auf einen Einhängerahmen für die verkaufsgerechte Darbietung von Compact-Discs (CDs (36)) mit einem Gehäuse (20), das eine weitgehend offene Vorderfläche (22) hat und in dem nebeneinander und übereinander eine Vielzahl von Halterungen (30) angeordnet sind, in denen sich einzeln zu entnehmende. in Behältern verpackte CDs (36) befinden, die hintereinander gestapelt und im wesentlichen parallel zur Vorderfläche (22) des Gehäuses (20) liegen, wobei Jede Halterung (30) jeweils zwei parallele Tragschienen (32) und zudem seitliche Halteschienen (34) aufweist, die Tragschienen (32) ein Gefälle zur Vorderfläche (22) von mindestens 10°, insbesondere 30° haben, hinter den gestapelten CDs (36) sich ein Gleitschieber (38) befindet und die vorderste CD (36) jedes Stapels einerseits gegen untere und obere Anlagemittel (46) gedrückt wird, und andererseits unter sich einen Freiraum hat, sodass sie angefasst und nach oben gehoben werden kann, wofür oben ein Freiraum oberhalb der vordersten CD (36) vorgesehen ist.

## Beschreibung

Die Erfindung bezieht sich auf einen Einhängerahmen für die verkaufsgerechte Darbietung von Compact-Discs (CDs) mit einem Gehäuse, das eine weitgehend offene Vorderfläche hat und in dem eine Vielzahl von Halterungen untergebracht sind, aus denen einzeln CDs entnommen werden können.

Für die verkaufsgerechte Darbietung von in einem Behälter verpackten CDs sind mehrere Forderungen zu erfüllen. So sollen die CDs gut sichtbar präsentiert sein, dies bedeutet, dass sie nicht mit einer Schmalseite ihres Behälters zum Käufer zeigen, vielmehr die CDs parallel zur Vorderfläche des Gehäuses liegen. Dadurch wird die Vorderfläche der einzelnen Behälter, in denen die CDs verpackt sind, sichtbar. Gerade diese Fläche enthält aber die meisten Informationen über die CD und ist häufig ansprechend gestaltet, so dass ein Kaufreiz ausgeübt wird. Weiterhin sollen die CDs einzeln entnommen werden können, nicht also irgendwie ungeordnet dargeboten werden. Die Einzelentnahme muß jedoch möglichst einfach und auch für den ungeübten Laien ohne irgendeine Anleitung erfolgen können. Insoweit besteht also die Anforderung, dass die optisch präsentierte CD sinnfällig und für jedermann verständlich einzeln aus der jeweiligen Halterung entnommen werden kann. Schließlich muß sich der Einhängerahmen wieder einfach füllen lassen, es muß also einfach sein, in die Halterungen wieder CDs einzusetzen.

Insgesamt wird ein Einhängerahmen für die Präsentation von CDs angestrebt, der ein optisch gutes Gesamtbild hat, in der Lage ist, höherwertige CDs als solche darzustellen und der sich für den Einsatz in Regalsystemen eignet, das in einer Vielzahl von Geschäften heute schon benutzt wird. Derartige Regalsysteme für eine Ladenausstattung finden sich beispielsweise in Drogeriemärkten. Sie haben vertikale Tragschienen, die miteinander durch Paneele verbunden sind. Sowohl an den Tragschienen als auch an den Paneelen können Haken, Regalbretter oder dergleichen untergebracht werden, die der Präsentation der zu verkaufenden Waren dienen.

Für den Einhängerahmen ist angestrebt, dass er unmittelbar an vertikale Tragschienen angehängt werden kann, insbesondere Haken hat, die ein Ein-hängen in zwei oder mehr benachbarte Tragschienen ermöglichen.

Die Erfindung sieht in dieser Hinsicht einen Einhängerahmen vor für die verkaufsgerechte Darbietung von Compact-Discs (CDs) mit einem Gehäuse, das eine weitgehend offene Vorderfläche hat und in dem nebeneinander und übereinander eine Vielzahl von Halterungen angeordnet sind, in denen sich einzeln zu entnehmende, in Behältern verpackte CDs befinden, die hintereinander gestapelt sind und im wesentlichen parallel zur Vorderfläche des Gehäuses liegen, wobei jede Halterung jeweils zwei parallele Tragschienen und zudem seitliche Halteschienen aufweist, die Tragschienen ein Gefälle zur Vorderfläche von mindestens 10°, insbesondere 30° haben, hinter den gestapelten CDs sich ein Gleitschieber befindet und die vorderste CD jedes Stapels einerseits gegen untere und obere Anlagemittel gedrückt wird, und andererseits unter sich einen Freiraum hat, so dass sie angefaßt und nach oben gehoben werden kann, wofür zusätzlich oben ein weiterer Freiraum oberhalb der vordersten CD vorgesehen ist.

Dieser Einhängerahmen kann ohne besondere Vorbereitungen unmittelbar in die bereits in vielen Läden vorhandenen Regalsysteme eingesetzt werden. Er ist mechanisch so aufgebaut, dass er praktisch keine Verschleißteile hat und daher in seiner Funktion sehr sicher ist. Durch den Gleitschieber werden die CDs immer in der Vertikalen gehalten und in die frontseitige Ebene, nämlich die Vorderfläche des Gehäuses, gedrückt. Dadurch gibt sich immer ein sehr ordentliches Gesamtbild, auch wenn einzelne CDs entnommen sind. Sind von einer Halterung sämtliche CDs entnommen, ist dies sofort erkennbar, weil dann der Gleitschieber sich in der Ebene der Vorderfläche befindet.

Aufgrund der Anordnung der Tragschiene mit Gefälle rutscht der Gleitschieber und rutschen die einzelnen CDs selbsttätig nach vorn in die Ebene der Vorderfläche. In jeder Halterung herrscht daher eine klare Ordnung, anders ausgedrückt befindet sich in jeder Halterung ein Stapel von hintereinander angeordneten CDs.

Für die Entnahme einer CD aus einer Halterung ist oberhalb zumindest der vordersten CD eines Stapels, vorzugsweise nur der vordersten CD eines Stapels, ein Freiraum vorgesehen, der es ermöglicht, dass die CD soweit angehoben wird, dass sie von ihren Tragschienen und insbesondere einem unteren Anlagemittel freikommt. Sie kann dann über das untere Anlagemittel hinweggehoben werden und fällt nach unten heraus. Dies allerdings nicht mit ihrem gesamten Gewicht, sondern sie bleibt durch den Druck des Gleitschiebers noch etwas gehalten und kann leicht nach unten herausgezogen werden.

In einer bevorzugten Weiterbildung drückt der Gleitschieber allein durch sein Gewicht und die Gefälleanordnung der Tragschiene den Stapel an vor ihm befindlichen CDs zusammen. Dadurch werden Federn oder andere elastische Mittel eingespart. Auf diese Weise wird ein weitgehend störungsfreier und wartungsfreier Betrieb ermöglicht. Bei elastischen Mitteln, beispielsweise Schraubenzug- oder Druckfedern, muß dagegen immer wieder damit gerechnet werden, dass Federn beschädigt werden, verbiegen oder ausleiern. Dies ist bei rein durch ihr Gewicht arbeitenden Gleitschiebern nicht zu befürchten.

Insoweit strebt die Erfindung an, dass die Gleitschieber ein ausreichendes Gewicht aufweisen, damit die vor ihr befindlichen Stapel an CDs bei jeder beliebigen, möglichen Füllung der Halterung selbsttätig zusammengedrückt werden. Bei einem ausreichend großen Gefälle genügt ein kleineres Gewicht, bei kleinerem Gefälle wird ein größeres Gewicht eingesetzt. Das Gewicht wird so abgestimmt, dass die CDs sicher zu einem Stapel zusammengehalten werden, allerdings nicht so stark zusammengedrückt werden, dass eine Entnahme, die ein Verschieben der vordersten CD gegenüber der nächsten notwendig macht, irgendwie beeinträchtigt wäre.

In einer weiteren Verbesserung ist der Massenmittelpunkt jedes Gleitschiebers einerseits oberhalb der Mitte zwischen den beiden Tragschienen und andererseits möglichst nahe an diesen Tragschienen angeordnet. Bei einem nicht zu weit von den Tragschienen entfernten Massenmittelpunkt und einem Massenmittelpunkt, der nicht einer Tragschiene näher ist als der anderen, wird eine gleichmäßige Belastung und eine sichere Funktion erreicht. Insbesondere wird aber auch ein Verkippen des Gleitschiebers erschwert.

Als besonders bevorzugt hat es sich herausgestellt, die Oberflächen von Gleitschieber und Tragschienen in dem Bereich, in dem beide in Kontakt kommen, so auszubilden, dass eine möglichst geringe Reibung bei einer Bewegung des Gleitschiebers gegenüber den ortsfesten Tragschienen auftritt. Günstig haben sich hier Beschichtungen mit Pulverlack, insbesondere aber auch Teflonbeschichtungen (eingetragene Marke) und Beschichtungen mit anderen Gleitmitteln erwiesen. Auch die Verwendung von reibungsvermindernden Gleitkörpern oder der Einsatz von Rollkörpern ist vorteilhaft.

Als Gleitschieber haben sich solche Schieber bewährt, die ein L-förmiges Profil haben. Sie haben somit zwei Schenkel, von denen der eine parallel zu den einzelnen CDs verläuft, während der andere in der Ebene der Schienen ist. Die beiden Schenkel haben damit einen Winkel, der zusammen mit dem Winkel des Gefälles einen Winkel von 90 Grad ergibt. Aufgrund des Schenkels, der sich parallel zu den Tragschienen erstreckt, kann die Führung an den Tragschienen relativ lang ausgebildet werden. Dadurch wird vermieden, dass bei einem Querstellen des Gleitschiebers ein Verklemmen oder festsitzendes Verkanten auftreten kann.

Als bevorzugt haben sich Haltemittel an den Gleitschiebern erwiesen, die die Tragschienen frei umgreifen. Dadurch wird vermieden, dass sich der Gleitschieber von den Tragschienen lösen kann, beispielsweise während eines Transports des Einhängerahmens.

Schließlich hat es sich als günstig herausgestellt, im oberen Bereich des Gehäuses, insbesondere im vorderen Teil der Oberwand, ein Klemmmittel für ein Display anzubringen. Hier eignen sich insbesondere in ihrer Tiefe verjüngende Schlitze, in die ein Display aus Pappe eingeklemmt werden kann.

Das Gehäuse hat im Bereich seiner Vorderfläche Seitenstreifen. Hinter diesen sind Leuchtmittel angeordnet, beispielsweise Leuchtstoffröhren. Diese beleuchten die CDs, die sich in ihrer Nähe befinden. In den Seitenstreifen sind aber auch Durchbrüche, insbesondere runde Löcher, vorgesehen, durch die das Licht der Leuchtmittel nach vorn hindurchtreten kann. Dadurch wird das optische Erscheinungsbild des Einhängerahmens verbessert.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- FIG. 1:: eine perspektivische Darstellung eines Einhängerahmens mit einer Vielzahl von Halterungen für CDs,
- FIG. 2:: eine Seitenansicht zweier übereinander befindlicher Halterungen,
- FIG. 3:: eine Vorderansicht eines Gleitschiebers mit eingezeichneten Tragschienen,
- FIG. 4:: eine Darstellung entsprechend Figur 3, jedoch in einer anderen Ausbildung des Gleitschiebers,
- FIG. 5:: eine Darstellung entsprechend Figur 3, jedoch in einer weiteren, anderen Ausbildung des Gleitschiebers und
- FIG. 6:: einen Schnitt parallel zur Oberwand des Gehäuses durch eine Kante, die sich im Bereich der Vorderwand befindet, dargestellt sind ein Leuchtmittel und eine Kunststoffblende hierfür.

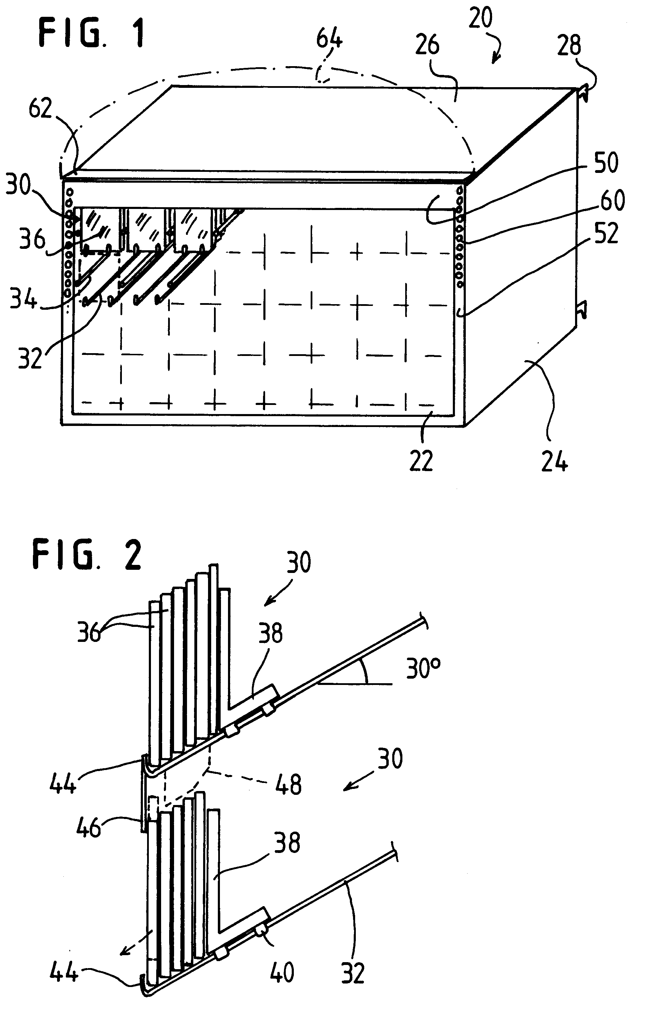

Der Einhängerahmen hat ein Gehäuse 20, das eine weitgehend offene Vorderfläche 22, zwei geschlossene Seitenwände 24, eine geschlossene Oberwand 26 und eine ebenfalls geschlossene, in der Figur 1 nicht erkennbare Unterwand aufweist. In seinen Abmessungen ist das Gehäuse 20 so ausgebildet, dass es dem Rastermaß eines Regalsystems entspricht. An seiner rückwärtigen Fläche springen Haken 28 vor, die für ein Einhängen in vertikale Tragschienen des Regalsystems ausgebildet sind. Bei dem Regalsystem kann es sich um ein Hängeregal oder um ein Standregal handeln.

Die Vorderfläche 22 ist schachbrettartig unterteilt, insgesamt in vier Zeilen mit jeweils acht Halterungen 30.

Die Halterungen 30 sind untereinander baugleich. Jede Halterung hat zwei Tragschienen 32, die in den Ausführungsbeispielen aus Rundmaterial, beispielsweise pulverbeschichteten oder hochglanzvernickelten Rundstäben mit einem Durchmesser von 2 bis 6 mm gebildet sind. Als Tragschienen können aber auch andere Profile, beispielsweise Dreieckprofile, hochkant angeordnete Flachprofile usw. Verwendung finden.

Die Tragschienen 32 schließen mit der Vertikalen einen Winkel von 30 Grad ein.

Weiterhin gehören zu jeder Halterung zwei seitliche Halteschienen 34, nämlich eine linke Halteschiene und eine rechte Halteschiene. Dabei können benachbarte, nicht am Rand befindliche Halterungen 30 eine Halteschiene 34 gemeinsam nutzen. Dadurch ist es möglich, dass ausgehend von einer ersten Halterung 30 die weiteren Halterungen derselben Zeile nur jeweils eine Halteschiene aufweisen müssen, weil sie die andere Halteschiene gemeinsam mit der in dieser Richtung benachbarten Halterungen nutzen.

Die CDs 34 liegen auf den zueinander parallelen Tragschienen 32 auf und werden durch die Halteschienen, die sich im Abstand der Breite des Behälters der CDs voneinander befinden, seitlich geführt und zusammengehalten. Figur 2 zeigt die Anordnung mehrerer CDs in übereinander befindlichen Halterungen 30. Eine Halterung 30 kann eine Vielzahl von CDs aufnehmen, z. B. zehn, zwanzig oder dreißig.

Jeder Halterung ist ein Gleitschieber 38 zugeordnet. Er ist relativ schwer ausgebildet, beispielsweise aus Stahlblech mit 3 bis 4 mm Wandstärke gebogen. Jeder Gleitschieber hat einen vertikalen Flansch, der parallel zu den CDs 36 verläuft, und einen nach hinten, von den CDs wegweisenden rückwärtigen Flansch, der parallel zu den Tragschienen 32 steht. Die Aufgabe des vertikalen Flansches ist es, flächig Druck auf die CDs auszuüben. Die Aufgabe des rückwärtigen Flansches ist es, Führungsmittel 40 aufzunehmen, die eine sichere Gleitführung der Tragschienen 32 ermöglichen, ohne dass ein Verklemmen auftritt, wenn die beiden Tragschienen 32 einer Halterung 30 einmal herstellungsbedingt unterschiedliche Abstände als in einer anderen Halterung aufweisen oder etwas verbogen sind. Weiterhin hat der rückwärtige Flansch ggf. Haltemittel 42. Sie dienen dazu, dass der Gleitschieber nicht von den Halteschienen einfach getrennt werden kann. Die Haltemittel 42 umgreifen daher zumindest teilweise die Tragschienen 32.

Wie aus Figur 2 ersichtlich ist, sind die Führungsmittel in Richtung der Tragschienen so lang ausgebildet, dass ein Verkanten oder Festklemmen des Gleitschiebers 38 in seinen Tragschienen 32 nicht möglich ist. Wie Figur 2 zeigt, sind zwei separate Führungsmittel 40 vorgesehen, die einen Abstand voneinander haben, der etwa der Länge des rückwärtigen Flansches entspricht. Der Abstand beträgt wenige Zentimeter, vorzugsweise liegt er bei zumindest der Hälfte des Abstandes der beiden Tragschienen 32 voneinander.

Die Gleitschieber 38 sind mit einer ausreichenden Masse versehen, damit sie unter Berücksichtigung des Gefällewinkels der Tragschienen 32 einen ausreichend starken Druck auf die vor ihnen befindlichen CDs 36 ausüben können, so dass diese in der Anordnung gemäß Figur 2 gehalten werden. Der Druck muß dabei ausreichen, diese vertikale Position der einzelnen CDs 36 immer wieder zu erreichen, auch wenn eine CD entnommen wurde oder gegen die vorderste CD in Richtung der Halteschienen 34 gedrückt wurde. Andererseits darf der Druck auf CDs 36 jedoch nicht so groß sein, dass die CDs nicht mehr gegeneinander verschoben werden können. Für die Entnahme, auf die im folgenden noch eingegangen werden wird, ist eine Relativverschiebung zwischen den CDs 36 notwendig.

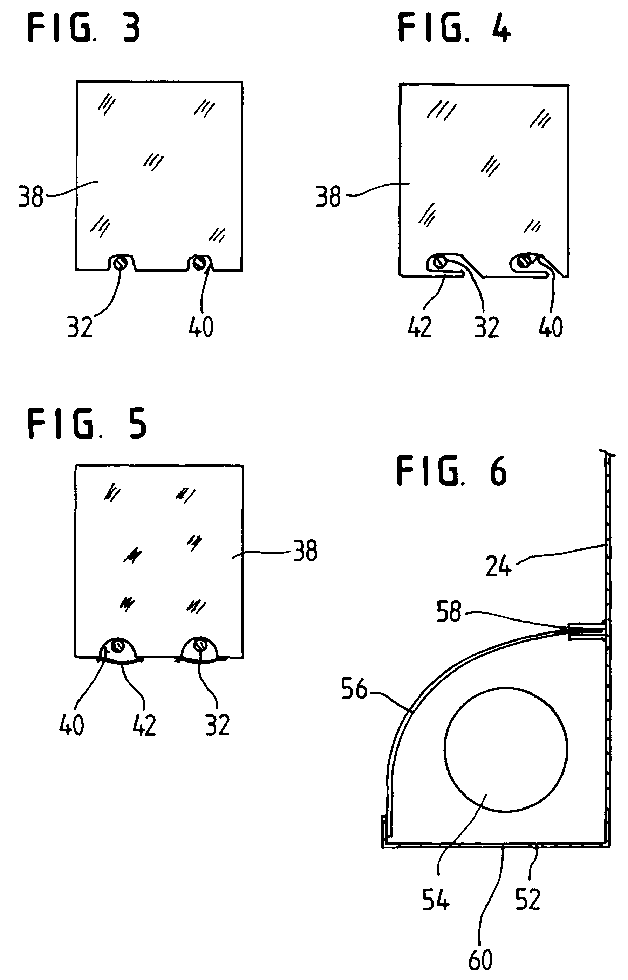

Im folgenden wird nun auf die Führungsmittel 40 und Haltemittel 42 näher eingegangen, dies unter Berücksichtigung der Figuren 3 bis 5. Grundsätzlich können die Führungsmittel 40 und die Haltemittel 42 miteinander kombiniert sein, sie können aber auch separate Ausbildung erfahren. Im Ausführungsbeispiel nach Figur 3 sind nur Führungsmittel 40 und keine Haltemittel 42 vorgesehen. Die Gleitschieber 38 haben an ihrer unteren, den Tragschienen 32 zugewandten Seite Ausnehmungen oder entsprechende Vorsprünge, in denen sich die Tragschienen 32 befinden. Diese Ausnehmungen sind in Verbindungsrichtung der beiden Tragschienen 32 so ausreichend breit gewählt, dass auch eine Abweichung des Abstandes der Tragschienen 32 kompensiert werden kann. Damit tritt ein Einklemmen nicht auf.

Im Ausführungsbeispiel nach Figur 4 befinden sich die Tragschienen 32 wiederum in relativ breiten Ausnehmungen, diese sind nach unten nun nicht mehr vollständig offen, sondern durch Zungen, die das Haltemittel 42 bilden, teilweise abgeschlossen. Damit ein Gleitschieber 38 von den Tragschienen 34 entnommen werden kann, muß er zunächst nach links bewegt und dann unter Fortsetzung dieser Bewegung nach oben angehoben werden. Dadurch kann er aus den Tragschienen 32 herausgefädelt werden.

Im Ausführungsbeispiel nach Figur 5 sind die Führungsmittel 40 durch im wesentlichen halbkreisförmigen Rillen gebildet, an denen die Tragschienen 32 anliegen. Als Haltemittel ist ein Draht oder eine Lasche 42 vorgesehen, die die Ausnehmungen unten überbrückt. Um den Gleitschieber 38 von den Tragschienen 32 entfernen zu können, müssen diese Haltemittel 42 durchtrennt werden, beispielsweise mit einem Seitenschneider. Das Profil im Führungsbereich bewirkt eine Zentrierung der Gleitschieber 38, da bei Ausweichen des Gleitschiebers 38 nach links oder rechts dieser angehoben werden muß.

Die einzelnen CDs 36 befinden sich vor den Gleitschiebern 38 in Form eines gestuften Stapels. Die vorderste CD liegt einerseits an einem unteren Anlagemittel 44 und andererseits an einem oberen Anlagemittel 46 an. Das untere Anlagemittel wird in der Ausführung nach den Figuren 1 und 2 durch die nach oben abgebogenen oder anderweitig fortgesetzten freien Enden der Tragschienen 32 gebildet. Das obere Anlagemittel 46 ist ein Stift oder ein Streifen, der in der Ausführung nach Figur 2 mit den hochgebogenen Endbereichen in Verbindung ist, dies aber nicht notwendigerweise sein muß. Bewährt haben sich Stifte aus einem Material wie die Tragschienen 32, die nach unten ragen.

Um die vorderste CD 36 einer Halterung entnehmen zu können, drückt man mit dem Finger zwischen den Tragschienen 32 unter die entsprechende CD und hebt diese dadurch soweit hoch, dass sie von ihren unteren Anlagemitteln 44 freikommt. Sie kann nun entsprechend dem Pfeil in Figur 2 entnommen werden.

Als bevorzugt hat es sich herausgestellt, etwa ab Mitte oder im hinteren Drittel der nachfolgenden CD den Raum oberhalb des Stapels zu begrenzen, wie dies strichpunktiert durch das Hindernis 48 angedeutet ist. Dieses kann beispielsweise aus Draht gebogen sein. Es verhindert, dass auch die zweite CD mit angehoben werden kann.

Für die oberste Zeile von Halterungen 30 wird das obere Anlagemittel 46 durch einen Streifen 50 gebildet, der in der Ebene der Vorderfläche 22 verläuft und mit der Oberwand 26 in Verbindung steht.

Auch von den Seitenwänden 24 springen in der Ebene der Vorderfläche 22 Seitenstreifen 52 vor. Hinter ihnen sind Leuchtmittel, beispielsweise Leuchtstoffröhren 54 angeordnet, hierzu wird auf Figur 6 verwiesen. Die Seitenstreifen sind so ausreichend breit, dass sich die Leuchtstoffröhre 54 vollständig hinter ihnen befindet. Zur Abdeckung der Leuchtstoffröhre ist ein streifenförmiger Zuschnitt aus einem biegsamen, aber elastischen Kunststoffmaterial, beispielsweise Acrylglas vorgesehen. Dieser Zuschnitt ist in einen Halteschlitz 58, der von der Seitenwand 24 nach innen vorspringt, eingesteckt und liegt an einem kleinen, rückgebogenen Schenkel des Seitenstreifens 52 innen federnd an. Dieser Zuschnitt 56 kann jederzeit leicht geöffnet werden, um die Leuchtstoffröhre 54 austauschen zu können.

Im Seitenstreifen 52 sind eine Vielzahl von kreisrunden Löchern 60 ausgebildet, die das Licht der Leuchtstoffröhre 54 nach vorn durchlassen.

Auf dem unmittelbar an die Vorderfläche 22 angrenzenden Teil der Oberwand 26 ist ein Klemmmittel 62 aufgebracht. Es bildet einen sich nach hinten verjüngenden Schlitz aus. In diesen Schlitz kann ein Display 64 eingesteckt werden.

Unter dem Begriff Behälter einer CD wird die aufklappbare, normalerweise aus glasklarem Kunststoff hergestellte, standardisierte Hülle verstanden, in denen CDs üblicherweise angeboten und verkauft werden. Es ist möglich, in diesem Behälter auch andere Gegenstände zu verpacken und anzubieten, z. B. Strümpfe, Photos usw.. Der erfindungsgemäße Einhängerahmen ist auch für den Verkauf derartiger Artikel geeignet.

## Patentansprüche

1. Einhängerahmen für die verkaufsgerechte Darbietung von Compact-Discs (CDs (36)) mit einem Gehäuse (20), das eine weitgehend offene Vorderfläche (22) hat und in dem nebeneinander und übereinander eine Vielzahl von Halterungen (30) angeordnet sind, in denen sich einzeln zu entnehmende, in Behältern verpackte CDs (36) befinden, die hintereinander gestapelt und im wesentlichen parallel zur Vorderfläche (22) des Gehäuses (20) liegen, wobei jede Halterung (30) jeweils zwei parallele Tragschienen (32) und zudem seitliche Halteschienen (34) aufweist, die Tragschienen (32) ein Gefälle zur Vorderflache (22) von mindestens 10°, insbesondere 30° haben, hinter den gestapelten CDs (36) sich ein Gleitschieber (38) befindet und die vorderste CD (36) jedes Stapels einerseits gegen untere und obere Anlagemittel (46) gedrückt wird, und andererseits unter sich einen Freiraum hat, sodass sie angefasst und nach oben gehoben werden kann, wofür oben ein Freiraum oberhalb der vordersten CD (36) vorgesehen ist.

2. Einhängerahmen nach Anspruch 1, dadurch gekennzeichnet, dass der Gleitschieber (38) allein durch sein Gewicht den Stapel an vor ihm befindlichen CDs (36) zusammendrückt, insbesondere, dass der Gleitschieber (38) keine elastischen Mittel aufweist.

3. Einhängerahmen nach Anspruch 1, dadurch gekennzeichnet, dass der Gleitschieber (38) ein ausreichendes Gewicht aufweist, um den vor ihm befindlichen Stapel an CDs (36) bei jeder beliebigen möglichen Füllung der Halterung (30) selbsttätig zusammenzudrücken.

4. Einhängerahmen nach Anspruch 1 dadurch gekennzeichnet, dass der Gleitschieber (38) einen Massenmittelpunkt hat, der möglichst nahe den Tragschienen (32) ist, insbesondere maximal 5, vorzugsweise 3 cm oberhalb der Tragschienen (32) ist und sich zudem insbesondere in einem Mittenbereich zwischen den beiden Tragschienen (32) befindet.

5. Einhängerahmen nach Anspruch 1, dadurch gekennzeichnet, dass die Berührungsflächen von Gleitschieber (38) und Tragschienen (32) eine Oberfläche aufweisen, die eine möglichst geringe Reibung bei Relativbewegung zwischen Gleitschieber (38) und Tragschienen (32) aufweist.

6. Einhängerahmen nach Anspruch 1, dadurch gekennzeichnet, dass der Gleitschieber (38) seitlich gesehen ein L-förmiges Profil aufweist.

7. Einhängerahmen nach Anspruch 1, dadurch gekennzeichnet, dass der Gleitschieber (38) an seiner unteren, den Tragschienen (32) zugewandten Fläche Führungsmittel (40) aufweist, die eine in Richtung der Tragschienen (32) gemessene Länge aufweisen, die so gross ist, dass ein Querstellen und nachfolgendes Verklemmen des Gleitschiebers (38) zu den Tragschienen (32) nicht möglich ist.

8. Einhängerahmen nach Anspruch 1, dadurch gekennzeichnet, dass der Gleitschieber (38) in seinem unteren, den Tragschienen (32) zugewandten Bereich Haltemittel (42) aufweist, mit denen er die Tragschienen (32) zumindest teilweise, vorzugsweise vollständig frei umgreift.

9. Einhängerahmen nach Anspruch 1, dadurch gekennzeichnet, dass das Gehäuse (20) Seitenwände, eine Oberwand (26) und eine Unterwand aufweist.

10. Einhängerahmen nach Anspruch 1, dadurch gekennzeichnet, dass im oberen Bereich des Gehäuses (20), insbesondere auf der Oberwand (26), ein Klemmittel für ein Display (64), insbesondere ein Schlitz ausgebildet ist.
